# EUROPÄISCHE PATENTSCHRIFT

(11) **EP 3 038 856 B1**
(45) Veröffentlichungstag und Bekanntmachung des Hinweises auf die Patenterteilung: **25.09.2019**
(21) Anmeldenummer: 14756083.3
(22) Anmeldetag: 29.08.2014
(51) Int. Cl.: B60N 2/75, B60N 2/68, B60N 2/80

(54) **SITZLEHNE FÜR EINEN FAHRZEUGSITZ UND FAHRZEUGSITZ**
BACKREST FOR A VEHICLE SEAT AND A VEHICLE SEAT
DOSSIER POUR UN SIÈGE DE VÉHICULE ET SIÈGE DE VÉHICULE

(30) Priorität: 30.08.2013 DE 102013217338; 10.12.2013 DE 102013225477
(43) Veröffentlichungstag der Anmeldung: 06.07.2016
(73) Patentinhaber: Adient Luxembourg Holding S.à r.l., 1855 Luxembourg (LU)
(72) Erfinder: TIPPL, Sascha, 71397 Leutenbach (DE); BEERMANN, Frank, 73230 Kirchheim/Teck (DE); SIEGL, Tobias, 73326 Deggingen (DE); KUTSCHAL, Tobias, 72766 Reutlingen (DE)
(74) Vertreter: Liedhegener, Ralf
(86) Internationale Anmeldenummer: PCT/EP2014/068451
(87) Internationale Veröffentlichungsnummer: WO 2015/028649

(56) Entgegenhaltungen:
- WO-A1-98/32627
- CA-A1- 2 491 299
- DE-A1-102008 022 108
- US-A- 5 988 757
- US-A1- 2009 184 541

## Beschreibung

Die Erfindung betrifft eine Sitzlehne für einen Fahrzeugsitz, mit einer tragenden Lehnenstruktur in Schalenbauweise und einer Designschale, die zumindest die Rückseite der Lehnenstruktur abdeckt sowie einen Fahrzeugsitz mit den Merkmalen des Anspruchs 1.

### Stand der Technik

Aus der DE 10 2005 059 854 B4 ist eine Sitzlehne für einen Fahrzeugsitz bekannt, deren tragende Struktur in Schalenbauweise aus einer faserverstärkten Kunststoffschale gebildet ist, die in den Bereichen, welche bezüglich der Kraftaufnahme gering beansprucht sind, eine verringerte Materialstärke und/oder Aussparungen aufweist. Die Kunststoffschale umfasst auf der vom Insassen abgewandten Rückseite eine von außen sichtbare Abdeckung als äußerste Schicht und bestimmt somit das äußere Erscheinungsbild der Sitzlehne.

Aus der US 3,713,696 ist eine Sitzlehne für einen Fahrzeugsitz bekannt, die eine tragende Lehnenstruktur in Schalenbauweise und eine Designschale, die die Rückseite der Lehnenstruktur abdeckt aufweist. Die Lehnenstruktur trägt auf der Vorderseite mehrere Polsterpads und ist als geschlossene Schale ausgeführt. In einer Ausführungsform weist die Schale einen schmalen vertikal verlaufenden Schlitz, der ein Federn der Polsterpads ermöglicht.

Aus der US 5,988,757 A ist ein Fahrzeugsitz mit einer Lehnenstruktur in Schalenbauweise bekannt, wobei in der Lehnenstruktur mehrere Öffnungen vorgesehen sind, die durch zwei Seitenteile der Lehnenstruktur begrenzt sind.

Die WO 98/32627 A1 offenbart einen Fahrzeugsitz mit einer Lehnenstruktur in Schalenbauweise, die mittels eines Beschlags drehbar an einer Sitzschienenanordnung angelenkt ist. Die Lehnenstruktur ist als eine einteilige Schale ausgebildet, die einen Lehnenrahmen zur Aufnahme eines Lehnenpolsters und einen Sitzkissen-Stützabschnitt aufweist.

Aus der US 2009/0184541 A1 ist Fahrzeugsitz mit einer eine integrierte Kopfstütze aufweisenden Rückenlehne bekannt. Die Rückenlehne verjüngt sich in einem oberen Bereich und geht in einen Kopfstützenbereich über.

Die DE 10 2008 022 108 A1 offenbart eine Sitzlehne für einen Fahrzeugsitz. Die Sitzlehne umfasst eine einen Rahmen schaffende Struktur für die Sitzlehne, die zum Anbringen in einem Fahrzeug eingerichtet ist, wobei der Rahmen einen Rückenlehnenabschnitt zum Stützen eines Rückens eines Insassen und einen Kopfstützenabschnitt zum Stützen eines Kopfes eines Insassen aufweist, wobei die Kopfstütze relativ zu dem Rahmen an eine ausgefahrene Position bewegt werden kann, um den Kopf des Insassen während eines Aufprallzustandes zu stützen.

### Aufgabe

Der Erfindung liegt die Aufgabe zu Grunde, eine Sitzlehne für einen Fahrzeugsitz mit einer tragenden Lehnenstruktur in Schalenbauweise zur Verfügung zu stellen, wobei das äußere Erscheinungsbild der Sitzlehne in großen Bereichen variiert werden kann, ohne dass die Lehnenstruktur angepasst werden muss. Zudem soll ein entsprechender Fahrzeugsitz mit einer solchen Lehne bereitgestellt werden. Der Fahrzeugsitz soll zudem gewichtsoptimiert sein.

### Lösung

Diese Aufgabe wird erfindungsgemäß gelöst durch eine Sitzlehne für einen Fahrzeugsitz, mit einer tragenden Lehnenstruktur in Schalenbauweise und einer Designschale, die zumindest die Rückseite der Lehnenstruktur abdeckt, wobei in der Lehnenstruktur eine Öffnung vorgesehen ist, die Öffnung durch zwei Seitenteile der Lehnenstruktur begrenzt ist und die Breite der Öffnung wenigstens 50% der maximalen Breite der Lehnenstruktur beträgt. Die Öffnung wird in der Figurenbeschreibung als erste Öffnung bezeichnet, um diese von gegebenenfalls vorhandenen weiteren Öffnungen in der Lehnenstruktur zu unterscheiden.

Die maximale Breite der Öffnung beträgt vorzugsweise wenigstens 50% der maximalen Breite der Lehnenstruktur. Höchst vorzugsweise beträgt die maximale Breite der Öffnung wenigstens 75% der maximalen Breite der Lehnenstruktur. Die größte Höhe in Vertikalrichtung z der Öffnung beträgt in Vertikalrichtung z vorzugsweise wenigstens 15%, höchst vorzugsweise wenigstens 20%.der maximalen Höhe der Lehnenstruktur.

Dadurch, dass in der Lehnenstruktur eine Öffnung vorgesehen ist, die Öffnung durch zwei Seitenteile der Lehnenstruktur begrenzt ist und die Breite der Öffnung wenigstens 50% der maximalen Breite der Lehnenstruktur beträgt, kann die Lehnenstruktur besonders leicht ausgeführt werden. Die Seitenteile bieten ausreichend Schutz vor Ladung.

Dadurch, dass zumindest die Rückseite der tragenden Lehnenstruktur durch eine Designschale abgedeckt ist, kann zudem die in Schalenbauweise ausgeführte und mit einer Öffnung versehene Lehnenstruktur gewichts- und komfortoptimiert konstruiert sein, ohne das äußere Erscheinungsbild des Fahrzeugsitzes zu berücksichtigen. Das äußere Erscheinungsbild des Fahrzeugsitzes wird durch die Designschale geprägt. Die Formgebung der tragenden Lehnenstruktur ist somit weitgehend unabhängig vom darzustellenden äußeren Erscheinungsbild der Sitzlehne. Die Lehnenstruktur kann zudem als Gleichteil in verschiedenen Sitzlehnen unterschiedlichen Designs eingesetzt werden. Eine kurzfristige Designänderung des Fahrzeugsitzes ist durch eine Modifizierung der Designschale möglich, ohne dass die sicherheitsrelevante, tragende Lehnenstruktur modifiziert werden muss. Zudem kann das Erscheinungsbild der Designschale mittels Lackierung, Bedruckung oder durch Verwendung von Farbfolien variiert werden, ohne dass ein Einfluss auf die Crasheigenschaften, beispielsweise durch chemische Reaktionen zwischen tragenden Strukturen und Lack, des Fahrzeugsitzes zu befürchten ist.

Vorzugsweise ist die Öffnung nach unten von einer Quertraverse der Lehnenstruktur begrenzt, die einteilig mit der Lehnenstruktur ausgebildet sein kann oder ein separates Bauteil ist.

Die Seitenteile verlaufen in einer besonders gewichtsoptimierten Ausführungsform ausgehend von zwei äußeren und unteren Eckbereichen der Lehnenstruktur mit zunehmender Höhe nach oben zur Sitzmitte hin gekrümmt. Die beiden Seitenteile gehen vorzugsweise ineinander über und begrenzen die Öffnung dadurch nach oben.

Unter dem Begriff einer tragenden Lehnenstruktur ist dabei eine Lehnenstruktur zu verstehen, die im Lastfall, beispielsweise während eines Crashs, aufgrund ihrer Festigkeit und Steifigkeit einen Großteil der auf die Sitzlehne wirkenden Kräfte aufnehmen kann. Unter einer Schalenbauweise ist eine lokal nur wenig profilierte, flächenhafte und gekrümmte Bauweise zu verstehen, die jedoch durchaus in einzelnen Bereichen auch Öffnungen aufweisen kann. Im Gegensatz zu einer solchen Schalenbauweise weisen Lehnenrahmen in Rahmenbauweise, beispielsweise aus einzelnen Stahlblechprofilen geschweißte Lehnenrahmen, eine stark profilierte Rahmenstruktur auf.

Die Designschale deckt zumindest die Rückseite der Lehnenstruktur, das heißt die dem Rücken eines Insassen abgewandte Seite ab, kann jedoch auch seitliche Teilbereiche, beispielsweise im Bereich von den Insassenkörper bei Kurvenfahrten stützenden Sitzseitenwangen, verdecken.

Der Vorderseite der Lehnenstruktur ist vorzugsweise vollständig durch ein Polster abgedeckt. Polster und Designschale ummanteln die Lehnenstruktur dann vollständig.

Zur Gewichtsminimierung ist die Lehnenstruktur in Leichtbauweise, insbesondere aus einem Leichtbauwerkstoff ausgeführt. Metallische Leichtbauwerkstoffe sind beispielsweise Aluminium, Magnesium, hochfeste Stähle und Titan. Daneben gelten Faserverbundwerkstoffe als klassische Leichtbauwerkstoffe.

Die Lehnenstruktur kann besonders gewichtsoptimiert als Carbon-Schale, insbesondere als einteilige Carbon-Schale, ausgeführt sein. Die Gewichtsvorteile des Carbon-Hybridwerkstoffes lassen sich optimal ausnutzen, weil die Lehnenstruktur weitgehend ohne Berücksichtigung des äußeren Erscheinungsbildes des Fahrzeugsitzes ausgelegt werden kann.

Vorzugsweise ist die Lehnenstruktur ergonomisch geformt und dadurch physiologisch an den Insassen angepasst. Dadurch wird selbst bei Verwendung dünner Polsterschichten ein hoher Sitzkomfort erreicht. Der Insasse ermüdet weniger schnell und das Verletzungsrisiko, insbesondere während eines Heckcrashs, wird reduziert.

Eine an ein SAE H-Punkt-Manikin (auch als SAE J826 H-Point Manikin bezeichnet) angepasste Kontur der Lehnenstruktur ermöglicht eine besonders bauraum- und komfortoptimierte Sitzlehne. Die Schaumauflage zwischen einem Insassen des Fahrzeugsitzes und der Lehnenstruktur kann minimiert werden. Der Bauraum für einen Insassen in einer hinter dem Fahrzeugsitz angeordneten Sitzreihe lässt sich dadurch vergrößern. Die ergonomische Formgebung ermöglicht zudem eine Lehnenstruktur ohne scharfe Kanten und ist dadurch für den Einsatz von Carbon geeignet.

Im Bereich der Seitenteile der Lehnenstruktur sollte der Abstand zwischen dem SAE H-Punkt-Manikin und der Lehnenstruktur 20 mm bis 40 mm betragen.

Dadurch ist ein guter Komfort bei geringem Bauraumbedarf gewährleistet. Vorzugsweise beträgt der Abstand zwischen dem SAE H-Punkt-Manikin und der Lehnenstruktur 20 mm bis 30 mm.

Die Kombination einer Lehnenstruktur mit einer Designschale ermöglicht einen hohen Integrationsgrad an Funktionen in die Lehnenstruktur, ohne das Design negativ zu beeinflussen und dadurch eine Verringerung der Bauteilanzahl. Hierdurch verringern sich auch die Komplexität und die Montagezeit des Fahrzeugsitzes.

In Vertikalrichtung ist die Lehnenstruktur im Bereich der Schultern eines Sitzinsassen bis auf einen Steg eingeschnürt. Dadurch kann die Lehnenstruktur auch in Verbindung mit Gurtdurchführungen durch die Sitzlehne, wie dies bei Sportsitzen üblich und beispielsweise aus der DE 10 2006 005 506 A1 bekannt ist, verwendet werden. Die Breite des Steges in Querrichtung beträgt weniger als die Hälfte, vorzugsweise weniger als ein Drittel und höchst vorzugsweise weniger als ein Viertel der maximalen Breite der Lehnenstruktur.

Die Designschale kann offen gestaltet werden, das heißt mit Öffnungen und Schlitzen zur Verbesserung des Sitz-Mikroklimas, beispielsweise für eine passive Luftventilation bzw. Luftzirkulation.

Eine Integration eines Seitenairbags kann an der Außen- und/oder der Innenseite der Designschale erfolgen.

Die Lehnenstruktur umfasst in deren oberem Bereich vorzugsweise einen Kopfstützenträger zur Aufnahme eines Kopfstützenmoduls. Der Kopfstützenträger ist eine Schnittstelle zu unterschiedlichen Kopfstützenmodulen, die je nach Kundenwunsch beispielsweise aus einem Baukasten entnommen und montiert werden können.

Die passive Sicherheit des Fahrzeugsitzes kann durch eine Integration einer crashaktiven Kopfstütze, wie beispielsweise aus der DE 102 15 054 A1 bekannt ist, erhöht werden.

Eine weitere Gewichtsreduzierung lässt sich durch Verwendung eines sogenannten Leichtschaumes als Schaumteil erzielen.

Eine optimierte Anbindung der Lehnenstruktur an das Beschlagoberteil eines Beschlages zur Lehnenneigungseinstellung sieht vor, dass das Beschlagoberteil formschlüssig in einer Vertiefung der Lehnenstruktur aufgenommen werden kann. Vorteilhafterweise ist das Beschlagoberteil im Bereich der Vertiefung zusätzlich mit der Lehnenstruktur 110 verklebt.

Die erfindungsgemäße Sitzlehne kann insbesondere vorteilhaft für Sportsitze eingesetzt werden, ist jedoch nicht auf eine Verwendung in Sportsitzen beschränkt.

Diese Aufgabe wird zudem durch einen Fahrzeugsitz mit den Merkmalen des Anspruchs 14 gelöst.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine Explosionsdarstellung des Ausführungsbeispiels,

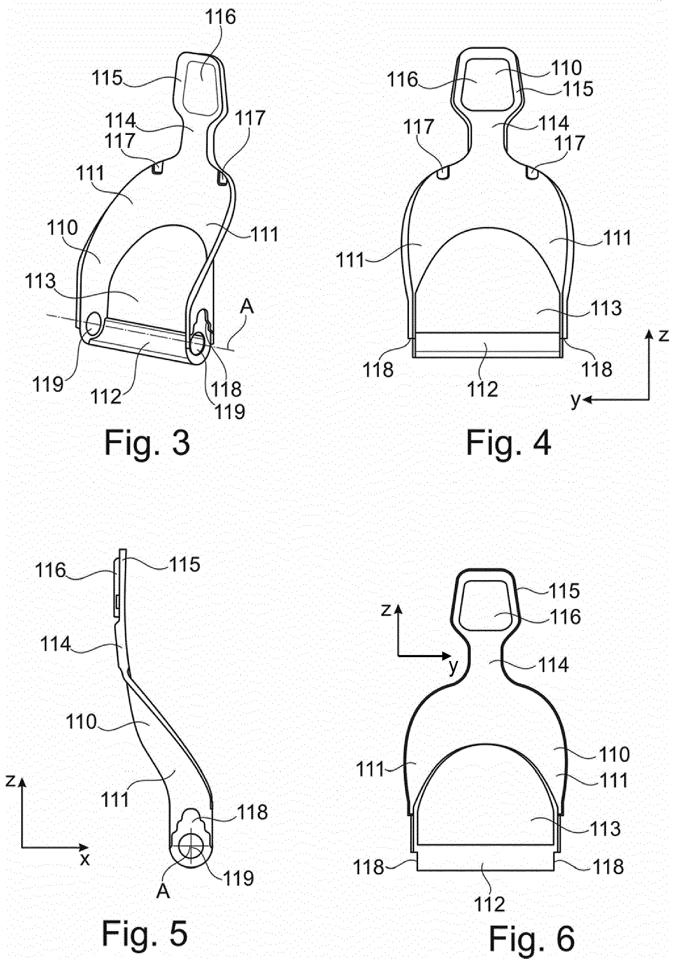

- Fig. 3:: eine perspektivische Ansicht auf die Vorderseite einer Lehnenstruktur der Sitzlehne des Ausführungsbeispiels,
- Fig. 4:: eine Vorderansicht der Lehnenstruktur aus Fig. 3,
- Fig. 5:: eine Seitenansicht der Lehnenstruktur aus Fig. 3,
- Fig. 6:: eine Rückansicht der Lehnenstruktur aus Fig. 3,
- Fig. 7:: eine perspektivische Ansicht eines in der Struktur des Fahrzeugsitzes positionierten SAE H-Punkt-Manikin, wobei die Designschale nicht dargestellt ist,
- Fig. 8:: eine weitere, der Fig. 7 ähnliche, perspektivische Ansicht eines in der Struktur des Fahrzeugsitzes positionierten SAE H-Punkt-Manikin,

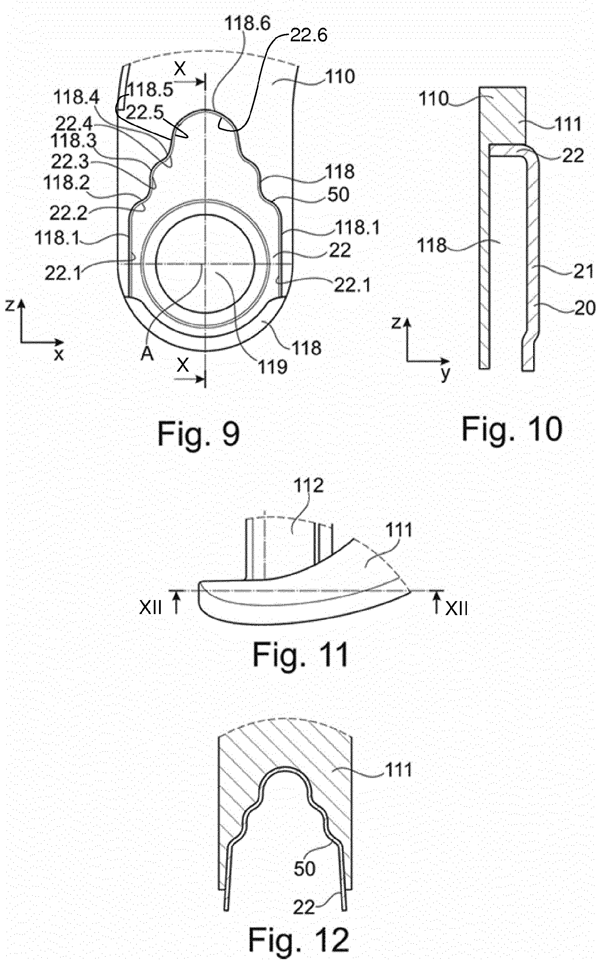

- Fig. 9:: eine Detailansicht aus der Seitenansicht aus Fig. 5,
- Fig. 10:: einen Schnitt entlang der Linie X - X in Fig. 9,
- Fig. 11:: eine Detailansicht aus einer Draufsicht auf die Lehnenstruktur aus Fig. 3 und
- Fig. 12:: einen Schnitt entlang der Linie XII - XII in Fig. 11.

Ein vorliegend als Sportsitz ausgebildeter Fahrzeugsitz 1 für ein Kraftfahrzeug weist eine Sitzlehne 100 und einen Sitzunterbau 200 auf. Die Sitzlehne 100 und der Sitzunterbau 200 sind mittels zweier an sich bekannter Beschläge 10 miteinander verbunden. Dazu weist jeder der beiden Beschläge 10 ein mit einer Lehnenstruktur 110 der Sitzlehne 100 verbundenes Beschlagoberteil 20 und ein mit einer Sitzunterbaustruktur 210 des Sitzunterbaus 200 verbundenes Beschlagunterteil 30 auf. Das Beschlagoberteil 20 und das Beschlagunterteil 30 sind über einen an sich bekannten Beschlagmechanismus relativ zueinander verstellbar, so dass die Neigung der Sitzlehne 100 um eine Lehnenschwenkachse A einstellbar ist. Ein entsprechender Getriebebeschlag ist beispielsweise aus der DE 10 2010 035 377 A1 bekannt.

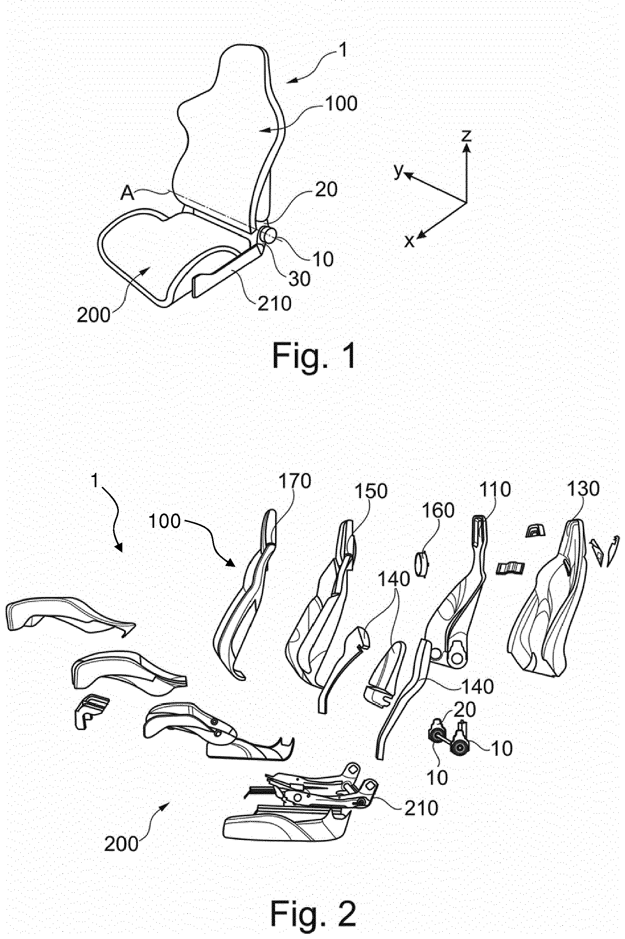

Der in Figur 1 schematisch dargestellte Fahrzeugsitz 1 wird nachfolgend unter Verwendung von drei senkrecht aufeinander stehenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Sitzlehne 100 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Die Sitzlehne 100 umfasst die Lehnenstruktur 110, deren Rückseite von einer Designschale 130 abgedeckt ist. Auf der Vorderseite der Lehnenstruktur 110 sind mehrere Einlegeteile 140 angeordnet. Die Vorderseite der Lehnenstruktur 110 und die Einlegeteile 140 sind zumindest weitgehend von einem Schaumteil 150 abgedeckt. Das Schaumteil 150 ist mit einem Bezug 170 abgedeckt, dessen äußere Konturen an der Designschale 130 befestigt sind, so dass der Bezug 170 und die Designschale 130 die Lehnenstruktur 110, die Einlegeteile 140 und das Schaumteil 150 zwischen sich aufnehmen. Optional kann an der Lehnenstruktur 110 zusätzlich ein Kopfstützenmodul 160, insbesondere für eine crashaktive Verstellung der Kopfstützenposition, befestigt sein.

Die Lehnenstruktur 110 ist ein lasttragendes Strukturteil des Fahrzeugsitzes 1. Die auf die Sitzlehne 100 wirkenden Kräfte, insbesondere Crashkräfte, werden weitgehend von der Lehnenstruktur 110 aufgenommen und über die Beschläge 10 in die Sitzunterbaustruktur 210 weitergeleitet.

Die Lehnenstruktur 110 ist vorliegend aus kohlenstofffaserverstärktem Kunststoff als sogenannte Carbonschale gefertigt. Alternativ kann die Struktur jedoch auch aus einem hochfesten Kunststoff, einem sonstigen Faserverbundwerkstoff oder aus Metallblech bestehen oder als Metallspritzgussteil ausgeführt sein. Vorliegend ist die Lehnenstruktur 110 einteilig ausgebildet, kann aber alternativ auch aus mehreren Einzelteilen zusammengefügt sein.

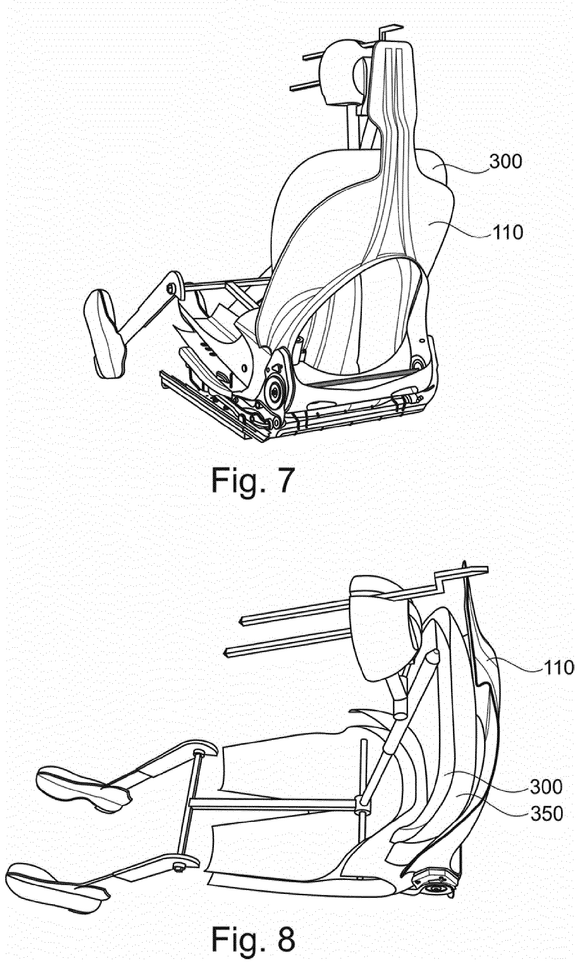

Wie in den Figuren 7 und 8 dargestellt, ist die Lehnenstruktur 110 derart ergonomisch geformt, dass der Abstand zwischen der Lehnenstruktur 110 und einem korrekt im Fahrzeugsitz 1 positionierten SAE H-Punkt-Manikin 300 (nach SAE-Norm J826), insbesondere dessen schüsselartigen Gesäß- und Rückenteilen, zumindest annähernd äquidistant ist. Insbesondere im Rückenbereich entspricht die zum Insassen hin orientierte Oberfläche der Lehnenstruktur 110 weitgehend einer äquidistanten Fläche 350, die 30mm beabstandet zum Rückenteil des SAE H-Punkt-Manikin 300 verläuft. Der aus diesem Abstand resultierende Bauraum ist bei einem fertig gepolsterten Fahrzeugsitz 1 durch die Einlegeteile 140, das Schaumteil 150 und den Bezug 170 ausgefüllt.

Die Designschale 130 und der Bezug 170 definieren das äußere Design der Sitzlehne 100, ohne wesentlich zur Festigkeit der Sitzlehne 100 beizutragen. Die Designschale 130 ist vorliegend als ein Spritzgussteil aus einem an sich bekannten Kunststoff ausgebildet. Der Bezug 170 besteht vorzugsweise weitgehend aus Stoff und/oder Leder.

Die Einlegeteile 140 sind vorzugsweise aus expandiertem Polypropylen (EPP) hergestellt und dienen der Befestigung weiterer in den Figuren nicht dargestellter Komponenten innerhalb der Sitzlehne 100. Weitere Komponenten sind beispielsweise an sich bekannte Lordosenstützen, Elektroantriebe oder Seitenwangenverstellmechanismen. Die Einlegeteile 140 tragen nur unwesentlich zur Festigkeit der Sitzlehne 100 bei.

Das Schaumteil 150 besteht vorliegend aus einem Polyurethan-Weichschaum und dient im Wesentlichen dem Sitzkomfort, ohne wesentlich zur Festigkeit der Sitzlehne 100 beizutragen.

Die Lehnenstruktur 110 ist weitgehend spiegelsymmetrisch zu einer parallel zur Längsrichtung x und parallel zur Vertikalrichtung z durch die Sitzmitte verlaufenden Ebene.

Die Lehnenstruktur 110 umfasst, in Querrichtung y gesehen, in beiden äußeren Bereichen ein weitgehend flächig ausgebildetes Seitenteil 111. Die beiden Seitenteile 111 verlaufen jeweils ausgehend von einem um die Lehnenschwenkachse A angeordneten und senkrecht zur Lehnenschwenkachse A orientierten unteren Bereich in Vertikalrichtung z zunehmend zur Sitzmitte hin gekrümmt und gedreht nach oben, und gehen dort ineinander über. Im unteren Bereich der Lehnenstruktur 110 sind die beiden Seitenteile 111 durch eine in Querrichtung y verlaufende Quertraverse 112 miteinander verbunden. Die Quertraverse 112 zwischen den beiden Seitenteile 111 die untere Begrenzung der Lehnenstruktur 110.

Die beiden Seitenteile 111 und die Quertraverse 112 bilden zwischen sich eine erste Öffnung 113. Durch die Öffnung 113 ist die Lehnenstruktur 110 eine geöffnete Schale. Die erste Öffnung 113 hat annähernd die Form einer halben Ellipse. Die maximale Breite der ersten Öffnung beträgt wenigstens 50% der maximalen Breite der Lehnenstruktur 110. Die erste Öffnung 113 erstreckt sich in Vertikalrichtung z über wenigstens bis zu 15% Gesamthöhe der Lehnenstruktur 110. Die erste Öffnung 113 ist spiegelsymmetrisch zu einer parallel zur Längsrichtung x und parallel zur Vertikalrichtung z durch die Sitzmitte verlaufenden Ebene. Die erste Öffnung 113 ist einem Bereich der Lehnenstruktur 110 angeordnet, der im Crashfall nicht durch Ladegut getroffen wird. Ladegut wird im Crashfall durch die beiden ineinander übergehenden Seitenteile 111 zurückgehalten. Im Vergleich zu einer Lehnenschale ohne Öffnung, weist die Lehnenstruktur 110 nur in den Bereichen Material auf, die im Crashfall hohen Belastungen ausgesetzt sind.

Ein Steg 114 verläuft ausgehend von dem Bereich der Lehnenstruktur, in dem die beiden Seitenteile 111 ineinander übergehen, im Bereich der Sitzmitte nach oben und endet in einem trapezförmigen Kopfstützenträger 115. Der Kopfstützenträger 115 weist eine als Vertiefung ausgebildete Kopfstützenaufnahme 116 auf.

Jeweils ein Befestigungspunkt 117 im oberen Bereich eines jeden Seitenteils 111 dient der Befestigung der Designschale 130, die dort beispielsweise mittels je einer angespritzten zungenförmigen Lasche von oben an der Lehnenstruktur 110 eingehängt ist.

Jedes der beiden Seitenteile 111 weist zur formschlüssigen Aufnahme des Beschlagoberteils 20 in seinem unteren Bereich eine Vertiefung 118 in Querrichtung y auf.

Die Vertiefung 118 verläuft - wie das übrige Seitenteil 111 in dessen unterem Bereich - weitgehende flächig und senkrecht zur Lehnenschwenkachse A. In der Mitte der Vertiefung 118 befindet sich eine kreisrunde zweite Öffnung 119, deren Mittelpunkt auf der Lehnenschwenkachse A liegt.

Die Vertiefung 118 ist vorliegend spiegelsymmetrisch zu einer Symmetrieebene, die die Lehnenschwenkachse A in sich aufnimmt und annähernd in Vertikalrichtung z verläuft. Der Abstand der Berandung einer Hälfte der Vertiefung 118 zu der Symmetrieebene variiert in Vertikalrichtung z und definiert die Breite der Vertiefung 118.

Die Tiefe der Vertiefung 118 gegenüber dem benachbarten Bereich des Seitenteils 111 ist konstant. Die Breite der Vertiefung 118 nimmt in Vertikalrichtung z von unten nach oben stufenweise ab, wobei die Stufen abgerundet ausgebildet sind.

Die äußere Abgrenzung der Vertiefung 118 zu dem benachbarten Bereich des Seitenteils 111 wird durch einen Randbereich ausgebildet. Nach unten hin ist die Vertiefung 118 nicht berandet.

Auf Höhe der Lehnenschwenkachse A ist die Breite der Vertiefung 118 zwischen zwei linear und annähernd parallel zueinander verlaufenden ersten Randbereichen 118.1 am größten. Nach oben hin schließt sich an jeden ersten Randbereich 118.1 jeweils ein zweiter Randbereich 118.2 an. Die beiden zweiten Randbereiche 118.2 bilden jeweils eine abgerundete Stufe zwischen den beiden ersten Randbereichen 118.1 und zwei linear und annähernd parallel zueinander verlaufenden dritten Randbereichen 118.3. Nach oben hin schließt sich an jeden dritten Randbereich 118.3 jeweils ein vierter Randbereich 118.4 an. Die beiden vierten Randbereiche 118.4 bilden jeweils eine abgerundete Stufe zwischen den beiden dritten Randbereichen 118.3 und zwei linear und annähernd parallel zueinander verlaufenden fünften Randbereichen 118.5. An den beiden oberen Enden der beiden fünften Randbereiche 118.5 sind die beiden fünften Randbereiche 118.5 durch einen halbkreisförmig gekrümmten sechsten Randbereich 118.6 miteinander verbunden.

Die beiden fünften Randbereiche 118.5 sind gegenüber den beiden ersten und dritten Randbereichen 118.1, 118.3 kürzer ausgebildet und entfallen in einer Abwandlung des Ausführungsbeispiels vollständig, so dass die beiden vierten Randbereiche 118.4 in diesem Fall unmittelbar in den sechsten Randbereich 118.6 übergehen.

Die jeweils annähernd parallel zueinander verlaufenden Randbereiche 118.1, 118.3 und 118.5 verlaufen vorzugsweise geringfügig abweichend von der Parallelität nach oben hin leicht aufeinander zu, so dass die Vertiefung 118 auch in den annähernd parallelen Bereichen nach oben leicht konisch zuläuft. Der Begriff annähernd parallel soll daher sowohl eine mathematisch exakte Parallelität als auch Winkelabweichungen von bis zu 5° umfassen.

Die Tiefe der Randbereiche 118.1 bis 118.6 in Querrichtung y definiert die Tiefe der Vertiefung 118.

Das zweite Beschlagoberteil 20 ist vorliegend aus Stahlblech gefertigt und hat einen Grundkörper 21, der weitgehend parallel zur Längsrichtung x und zur Vertikalrichtung z verläuft. Die Außenkontur des Grundkörpers 21 weist einen Flansch 22 auf, der senkrecht zum Grundkörper 21 in Querrichtung y und in Richtung der Sitzmitte orientiert ist. Der Flansch 22 ist in mehrere Bereiche unterteilt, die jeweils komplementär zu den Randbereichen 118.1 bis 118.6 der Vertiefung 118 ausgebildet sind, so dass die Vertiefung 118 den Flansch 22 formschlüssig in sich aufnimmt. Vorliegend liegen jeweils zwei erste Flanschbereiche 22.1 an den beiden ersten Randbereichen 118.1, zwei zweite Flanschbereiche 22.2 an den beiden zweiten Randbereichen 118.2, zwei dritte Flanschbereiche 22.3 an den beiden dritten Randbereichen 118.3, zwei vierte Flanschbereiche 22.4 an den beiden vierten Randbereichen 118.4, zwei fünfte Flanschbereiche 22.5 an den beiden fünften Randbereichen 118.5 und ein sechster Flanschbereich 22.6 an dem sechsten Randbereich 118.6 an, gegebenenfalls unter Zwischenlage eines Klebstoffes 50.

In einer Abwandlung des Ausführungsbeispiels liegen zum Ausgleich von Fertigungstoleranzen nur einige der Flanschbereiche 22.1 bis 22.6 an den zugeordneten Randbereichen 118.1 bis 118.6 an. Teilweise sind die Flanschbereiche 22.1 bis 22.6 von den zugeordneten Randbereichen 118.1 bis 118.6 geringfügig entfernt.

Vorliegend ist der Flansch 22 und somit das Beschlagoberteil 20 mit der Lehnenstruktur 110 zusätzlich verklebt. Dazu ist eine dünne Schicht des Klebstoffs 50 zwischen den aneinander anliegenden Flanschbereichen 22.1 bis 22.6 und den Randbereichen 118.1 bis 118.6 vorgesehen.

In einem weiteren, in den Figuren nicht dargestellten Ausführungsbeispiel ist die Quertraverse als gesondertes Bauteil ausgeführt und wird gemeinsam mit den Beschlägen an die Lehnenstruktur gefügt. Die erste Öffnung ist somit nach unten hin nicht durch einen Teil der Lehnenstruktur, sondern durch ein gesondert ausgebildetes Bauteil begrenzt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz, Sportsitz
- 10: Beschlag
- 20: Beschlagoberteil
- 21: Grundkörper
- 22: Flansch
- 22.1: erster Flanschbereich
- 22.2: zweiter Flanschbereich
- 22.3: dritter Flanschbereich
- 22.4: vierter Flanschbereich
- 22.5: fünfter Flanschbereich
- 22.6: sechster Flanschbereich
- 30: Beschlagunterteil
- 50: Klebstoff
- 100: Sitzlehne
- 110: Lehnenstruktur
- 111: Seitenteil
- 112: Quertraverse
- 113: erste Öffnung
- 114: Steg
- 115: Kopfstützenträger
- 116: Kopfstützenaufnahme
- 117: Befestigungspunkt
- 118: Vertiefung
- 118.1: erster Randbereich
- 118.2: zweiter Randbereich
- 118.3: dritter Randbereich
- 118.4: vierter Randbereich
- 118.5: fünfter Randbereich
- 118.6: sechster Randbereich
- 119: zweite Öffnung
- 130: Designschale
- 140: Einlegeteil
- 150: Schaumteil
- 160: Kopfstützenmodul
- 170: Bezug
- 200: Sitzunterbau
- 210: Sitzunterbaustruktur
- 300: SAE H-Punkt-Manikin
- 350: äquidistante Fläche
- A: Lehnenschwenkachse
- x: Längsrichtung
- y: Querrichtung
- z: Vertikalrichtung

## Patentansprüche

1. Sitzlehne (100) für einen Fahrzeugsitz (1), mit einer tragenden Lehnenstruktur (110) in Schalenbauweise und einer Designschale (130), die zumindest die Rückseite der Lehnenstruktur (110) abdeckt, wobei in der Lehnenstruktur (110) eine Öffnung (113) vorgesehen ist, die Öffnung (113) durch zwei Seitenteile (111) der Lehnenstruktur (110) begrenzt ist und die Breite der Öffnung wenigstens 50% der maximalen Breite der Lehnenstruktur (110) beträgt, wobei die Lehnenstruktur (110) in einem Bereich, der in Vertikalrichtung (z) annähernd auf Höhe der Schultern eines Sitzinsassen angeordnet ist, zu einem Steg (114) eingeschnürt ist, und in Querrichtung (y) die Breite des Stegs (114) weniger als die Hälfte der maximalen Breite der Lehnenstruktur (110) beträgt.

2. Sitzlehne (100) nach Anspruch 1, **dadurch gekennzeichnet, dass** in Querrichtung (y) die Breite des Stegs (114) weniger als ein Drittel der maximalen Breite der Lehnenstruktur (110) beträgt.

3. Sitzlehne (100) nach Anspruch 1 oder 2, **dadurch gekennzeichnet, dass** die Öffnung (113) nach unten von einer Quertraverse (112) der Lehnenstruktur (110) begrenzt ist.

4. Sitzlehne (100) nach einem der Ansprüche 1 bis 3, **dadurch gekennzeichnet, dass** ausgehend von zwei äußeren und unteren Eckbereichen der Lehnenstruktur (110) jeweils ein Seitenteil (111) nach oben verläuft und zunehmend zur Sitzmitte hin gekrümmt ist.

5. Sitzlehne (100) nach einem der Ansprüche 1 bis 4, **dadurch gekennzeichnet, dass** die beiden Seitenteile (111) ineinander übergehen und die Öffnung (113) nach oben hin begrenzen.

6. Sitzlehne (100) nach einem der Ansprüche 1 bis 5, **dadurch gekennzeichnet, dass** die Lehnenstruktur (110) in Leichtbauweise, insbesondere aus einem Leichtbauwerkstoff ausgeführt ist.

7. Sitzlehne (100) nach Anspruch 6, **dadurch gekennzeichnet, dass** die Lehnenstruktur (110) als einteilige Carbon-Schale ausgeführt ist.

8. Sitzlehne (100) nach einem der Ansprüche 1 bis 7, **dadurch gekennzeichnet, dass** die Lehnenstruktur (110) ergonomisch geformt ist.

9. Sitzlehne (100) nach Anspruch 8, **dadurch gekennzeichnet, dass** die Lehnenstruktur (110) im Bereich der Seitenteile (111) derart an ein SAE H-Punkt-Manikin (300) angepasst ist, dass der Abstand zwischen der Lehnenstruktur (110) und dem SAE H-Punkt-Manikin (300) zwischen 20 mm und 40 mm beträgt.

10. Sitzlehne (100) nach einem der Ansprüche 1 bis 9, **dadurch gekennzeichnet, dass** der Steg (114) oberhalb der Seitenteile (111) angeordnet ist.

11. Sitzlehne (100) nach einem der Ansprüche 1 bis 10, **dadurch gekennzeichnet, dass** die Lehnenstruktur (110) in einem in Vertikalrichtung (z) oberen Bereich des Stegs (114) einen Kopfstützenträger (115) zur Aufnahme eines Kopfstützenmoduls (160) umfasst.

12. Sitzlehne (100) nach Anspruch 11, **dadurch gekennzeichnet, dass** das Kopfstützenmodul (160) einen crashaktiven Verstellmechanismus enthält.

13. Sitzlehne (100) nach einem der Ansprüche 1 bis 12, **dadurch gekennzeichnet, dass** die Sitzlehne (100) mittels wenigstens eines Beschlags (10) um eine Lehnenschwenkachse (A) einstellbar an einer Sitzunterbaustruktur (210) angebunden ist und insbesondere ein Beschlagoberteil (20) des Beschlags (10) in einer Vertiefung (118) der Lehnenstruktur (110) aufgenommen ist.

14. Fahrzeugsitz (1), insbesondere Sportsitz, mit einer Sitzlehne (100) nach einem der Ansprüche 1 bis 13.

## Claims

1. Backrest (100) for a vehicle seat (1), having a load-bearing backrest structure (110) of shell type of construction and having a design shell (130) which covers at least the rear side of the backrest structure (110), wherein an opening (113) is provided in the backrest structure (110), the opening (113) is delimited by two side parts (111) of the backrest structure (110), and the width of the opening amounts to at least 50% of the maximum width of the backrest structure (110), wherein backrest structure (110), in a region which in the vertical direction (z) is arranged approximately at the level of the shoulders of a seat occupant, is constricted to form a web (114), and in the transverse direction (y), the width of the web (114) amounts to less than half of the maximum width of the backrest structure (110).

2. Backrest (100) according to Claim 1, **characterized in that**, in the transverse direction (y), the width of the web (114) amounts to less than one third of the maximum width of the backrest structure (110).

3. Backrest (100) according to Claim 1 or 2, **characterized in that** the opening (113) is delimited in a downward direction by a crossmember (112) of the backrest structure (110).

4. Backrest (100) according to one of Claims 1 to 3, **characterized in that**, proceeding from two outer and lower corner regions of the backrest structure (110), in each case one side part (111) runs upward and is increasingly curved toward the seat center.

5. Backrest (100) according to one of Claims 1 to 4, **characterized in that** the two seat parts (111) merge into one another and delimit the opening (113) in an upward direction.

6. Backrest (100) according to one of Claims 1 to 5, **characterized in that** the backrest structure (110) is of lightweight type of construction, formed in particular from a lightweight structural material.

7. Backrest (100) according to Claim 6, **characterized in that** the backrest structure (110) is in the form of a unipartite carbon shell.

8. Backrest (100) according to one of Claims 1 to 7, **characterized in that** the backrest structure (110) is ergonomically shaped.

9. Backrest (100) according to Claim 8, **characterized in that** the backrest structure (110) is, in the region of the side parts (111), adapted to an SAE H-point manikin (300) such that the spacing between the backrest structure (110) and the SAE H-point manikin (300) amounts to between 20 mm and 40 mm.

10. Backrest (100) according to one of Claims 1 to 9, **characterized in that** the web (114) is arranged above the side parts (111).

11. Backrest (100) according to one of Claims 1 to 10, **characterized in that** the backrest structure (110) comprises, in an upper region of the web (114) in the vertical direction (z), a headrest support (115) for receiving a headrest module (160).

12. Backrest (100) according to Claim 11, **characterized in that** the headrest module (160) comprises an adjustment mechanism which is active in the event of a crash.

13. Backrest (100) according to one of Claims 1 to 12, **characterized in that** the backrest (100) is attached by way of at least one fitting (10) to a seat base structure (210) so as to be adjustable about a backrest pivot axis (A), and in particular, a fitting upper part (20) of the fitting (10) is received in a depression (118) of the backrest structure (110).

14. Vehicle seat (1), in particular sports seat, having a backrest (100) according to one of Claims 1 to 13.

## Revendications

1. Dossier de siège (100) pour un siège de véhicule (1), comprenant une structure de dossier (110) porteuse de construction monocoque et une coque design (130) qui recouvre au moins le côté arrière de la structure de dossier (110), une ouverture (113) étant prévue dans la structure de dossier (110), l'ouverture (113) étant limitée par deux parties latérales (111) de la structure de dossier (110) et la largeur de l'ouverture correspondant à au moins 50 % de la largeur maximale de la structure de dossier (110), la structure de dossier (110), dans une région qui est disposée dans la direction verticale (z) approximativement à la hauteur des épaules d'un occupant du siège, étant rétrécie jusqu'à former une branche (114), et dans la direction transversale (y), la largeur de la branche (114) étant inférieure à la moitié de la largeur maximale de la structure de dossier (110) .

2. Dossier de siège (100), selon la revendication 1, **caractérisé en ce que**, dans la direction transversale (y), la largeur de la branche (114) est inférieure à un tiers de la largeur maximale de la structure de dossier (110).

3. Dossier de siège (100) selon la revendication 1 ou 2, **caractérisé en ce que** l'ouverture (113) est limitée vers le bas par une traverse (112) de la structure de dossier (110).

4. Dossier de siège (100) selon l'une quelconque des revendications 1 à 3, **caractérisé en ce qu'**à partir de deux régions de coin extérieures et inférieures de la structure de dossier (110), à chaque fois une partie latérale (111) s'étend vers le haut et est recourbée de manière croissante vers le centre du siège.

5. Dossier de siège (100) selon l'une quelconque des revendications 1 à 4, **caractérisé en ce que** les deux parties latérales (111) se prolongent l'une dans l'autre et limitent l'ouverture (113) vers le haut.

6. Dossier de siège (100) selon l'une quelconque des revendications 1 à 5, **caractérisé en ce que** la structure de dossier (110) est réalisée sous forme de construction légère, notamment à partir d'un matériau de construction léger.

7. Dossier de siège (100) selon la revendication 6, **caractérisé en ce que** la structure de dossier (110) est réalisée sous forme de coque en carbone d'une seule pièce.

8. Dossier de siège (100) selon l'une quelconque des revendications 1 à 7, **caractérisé en ce que** la structure de dossier (110) présente une forme ergonomique.

9. Dossier de siège (100) selon la revendication 8, **caractérisé en ce que** la structure de dossier (110), dans la région des parties latérales (111) est adaptée à un mannequin Point-H homologué SAE (300), de telle sorte que la distance entre la structure de dossier (110) et le mannequin Point-H homologué SAE (300) soit comprise entre 20 mm et 40 mm.

10. Dossier de siège (100) selon l'une quelconque des revendications 1 à 9, **caractérisé en ce que** la branche (114) est disposée au-dessus des parties latérales (111).

11. Dossier de siège (100) selon l'une quelconque des revendications 1 à 10, **caractérisé en ce que** la structure de dossier (110) comprend, dans une région supérieure, dans la direction verticale (z) de la branche (114), un support d'appui-tête (115) pour recevoir un module d'appui-tête (160).

12. Dossier de siège (100) selon la revendication 11, **caractérisé en ce que** le module d'appui-tête (160) contient un mécanisme de réglage actif en cas de collision.

13. Dossier de siège (100) selon l'une quelconque des revendications 1 à 12, **caractérisé en ce que** le dossier de siège (100) est relié à une structure inférieure de siège (210) de manière ajustable au moyen d'au moins une ferrure (10) autour d'un axe de pivotement de dossier (A) et notamment une partie supérieure de ferrure (20) de la ferrure (10) est reçue dans un renfoncement (118) de la structure de dossier (110).

14. Siège de véhicule (1), en particulier siège sport, comprenant un dossier de siège (100) selon l'une quelconque des revendications 1 à 13.
